# EUROPEAN PATENT SPECIFICATION

(11) **EP 1 626 848 B1**
(45) Date of publication and mention of the grant of the patent: **19.03.2008**
(21) Application number: 04734452.8
(22) Date of filing: 21.05.2004
(51) Int. Cl.: B28B 23/00, B28B 21/56

(54) **BOTTOM RING FOR A MOULD FOR CASTING A CONCRETE PIPE WITH PARTIALLY EMBEDDED RUBBER STRIP**
UNTERRING FÜR EIN FORMWERKZEUG ZUM GIESSEN EINES BETONROHRS MIT TEILWEISE EINGEBETTETEM KAUTSCHUKBAND
ANNEAU DE FOND POUR UN MOULE DESTINE AU COULAGE D'UN TUBE DE BETON A BANDE DE CAOUTCHOUC PARTIELLEMENT INCORPOREE

(30) Priority: 28.05.2003 SE 0301561
(43) Date of publication of application: 22.02.2006
(73) Proprietor: Trelleborg Forsheda Building AB, 331 29 Värnamo (SE)
(72) Inventor: CAVKA, Elvir, S-331 41 Värnamo (SE)
(74) Representative: Hjalmarsson, Magnus Axel
(86) International application number: PCT/SE2004/000788
(87) International publication number: WO 2005/000549

(56) References cited:
- EP-A2- 1 104 825
- DE-A1- 3 818 064
- DE-A1- 19 538 113
- DE-U1- 20 216 186
- FR-A- 2 695 589
- FR-A1- 2 710 085
- US-A- 4 592 674

## Description

### Field of the Invention

The present invention relates to a bottom ring for a mould for casting a concrete pipe, which bottom ring is adapted to form an end face of the concrete pipe.

### Background Art

DE 202 16 186 U1 shows in Fig. 6 a concrete pipe, which has an end face and is arranged to be assembled with another concrete pipe provided with an end face, with intermediate load-distributing strips which have a first portion embedded in the concrete pipe, and a second portion projecting from the end face of the concrete pipe. The load-distributing strips here consist of sand-filled plastic tubes.

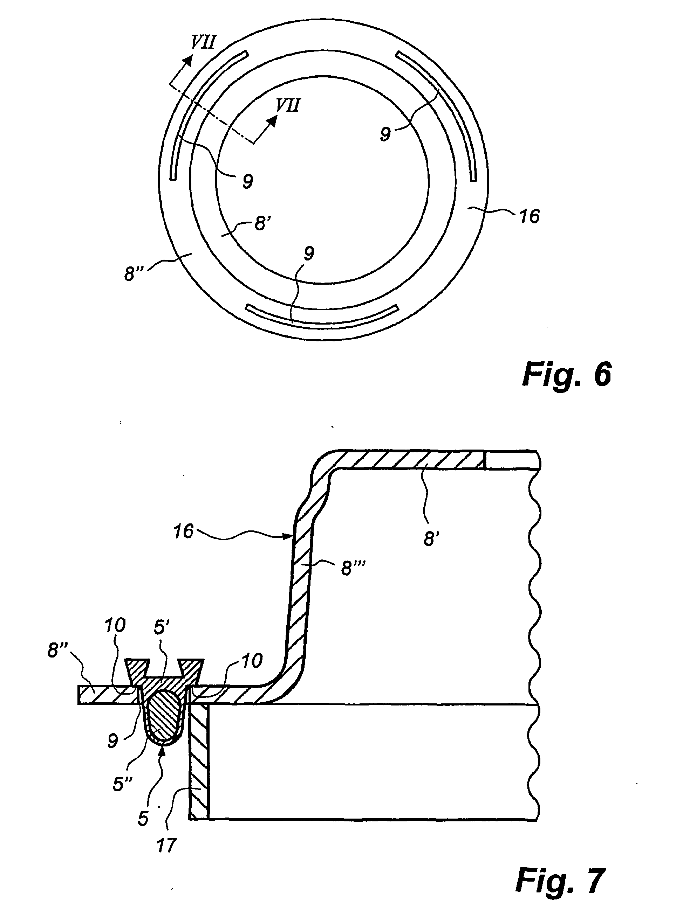

It has been found advantageous to use concrete pipes provided with load-distributing strips attached thereto, instead of using, like before, concrete pipes and separate load-distributing strips or rings which are mounted in the place of use, since handling when assembling the concrete pipes will be significantly simplified with the load-distributing strips mounted from the beginning. The above-mentioned document shows in Fig. 7 a bottom ring which is included in a mould for casting of concrete pipes and which for each strip has a recess for holding the associated strip. Each strip is held in its recess in such a manner that said second portion thereof is placed in the recess, while said first portion thereof is located above the bottom surface of the bottom ring. FR-A-2 695 589 discloses a bottom ring and a method for casting concrete pipes according to the pre-ambles of independent claims 1 and 6 respectively.

### Summary of the Invention

The object of the present invention is to provide a simple bottom ring for a mould intended for casting a concrete pipe provided with partially embedded load-distributing strips, especially a bottom ring of this type, which in a very simple way can be manufactured by modifying an existing bottom ring for a mould intended for casting a concrete pipe without partially embedded load-distributing strips.

According to the invention, this object is achieved by a bottom ring, which is of the type stated by way of introduction and characterised in that it has at least two through slots which extend in the circumferential direction of the ring and are distributed in the circumferential direction and hold rubber strips for partial embedding in the concrete pipe during casting of the concrete pipe, said slots having a smaller width than a first portion of the rubber strips, which is adapted to be embedded in the concrete pipe, and a greater width than a second portion thereof, which is adapted to project from the concrete pipe, the bottom ring holding the rubber strips suspended from the slots.

Preferably the rubber strips have between their first portion and second portion two opposite shoulder portions, by means of which the rubber strips are suspended from the slots.

In one embodiment, the slots are distributed along a circle and, in another embodiment, some of the slots are distributed along a first circle and the rest of the slots are distributed along a second circle. In the latter case, the slots distributed along the first circle are preferably offset in the circumferential direction relative to the slots distributed along the second circle.

### Brief Description of the Drawings

The invention will now be described in more detail with reference to the accompanying drawings.
Fig. 1 is a vertical sectional view and shows a portion of a concrete pipe provided with a partially embedded rubber strip.
Fig. 2 is a top plan view and shows a bottom ring according to the invention intended for a mould for casting the concrete pipe according to Fig. 1.
Fig. 3 is an enlarged sectional view taken along line III-III in Fig. 2 and shows the bottom ring with a rubber strip arranged therein.
Fig. 4 is a top plan view and shows an alternative embodiment of a bottom ring according to the invention.
Fig. 5 corresponds to Fig. 1 but shows the concrete pipe with the rubber strip embedded in a different position.
Fig. 6 corresponds to Fig. 2 but shows a bottom ring according to the invention intended for a mould for casting the concrete pipe according to Fig. 5.
Fig. 7 is an enlarged sectional view taken along line VII-VII in Fig. 6 and shows the bottom ring with a rubber strip arranged therein.

### Description of Preferred Embodiments

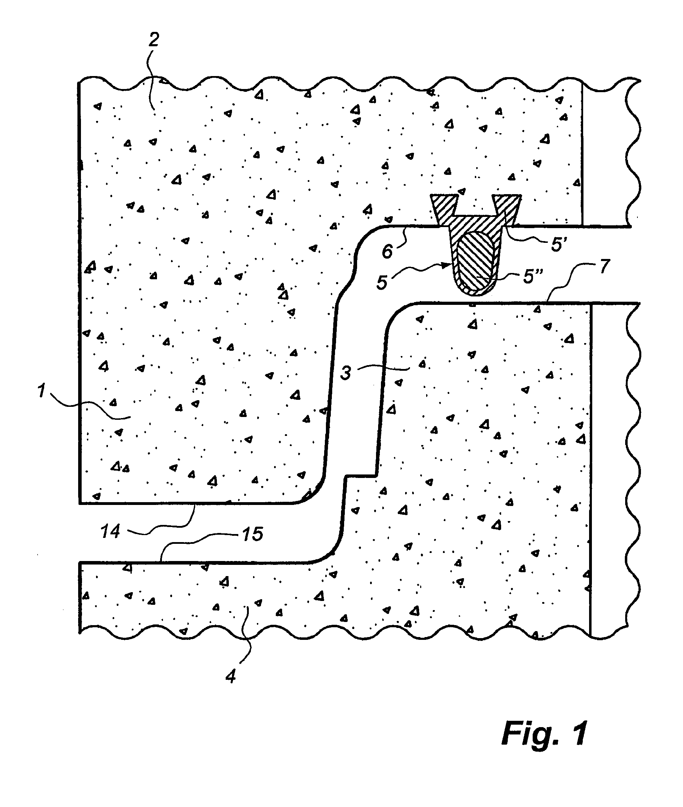

Fig. 1 shows an end portion of a concrete pipe 2 provided with a socket end 1 and an opposite end portion of a concrete pipe 4 provided with a spigot end 3. The two concrete pipes 2 and 4 are to be assembled end face to end face with an intermediate load-distributing means, which here consists of three circular-arc-shaped rubber strips 5. The three circular-arc-shaped load-distributing strips 5 are partially embedded in the concrete pipe 2 and are uniformly distributed in the circumferential direction thereof. Each of the strips 5 has in the shown example an extent of about 60°.

Each strip 5 has a first portion 5' embedded in the concrete pipe 2, and a second portion 5" projecting essentially axially from the radially inner end face 6 of the concrete pipe 2. The first portion 5' is made of a vulcanised rubber material with a hardness of 35-70 IRHD. The second portion 5", which has a cross-section tapering away from the first portion 5', consists of a softer core of unvulcanised rubber material, which is externally enclosed by a layer of vulcanised rubber material.

When the concrete pipes 2 and 4 are assembled in a conventional manner, the load-distributing means (strips 5), is compressed and deformed between the radially inner end faces 6 and 7 of the two pipes. It should here be noted that a sealing ring is arranged in a conventional manner between the two concrete pipes 2 and 4. However, no such sealing ring is shown in the drawings.

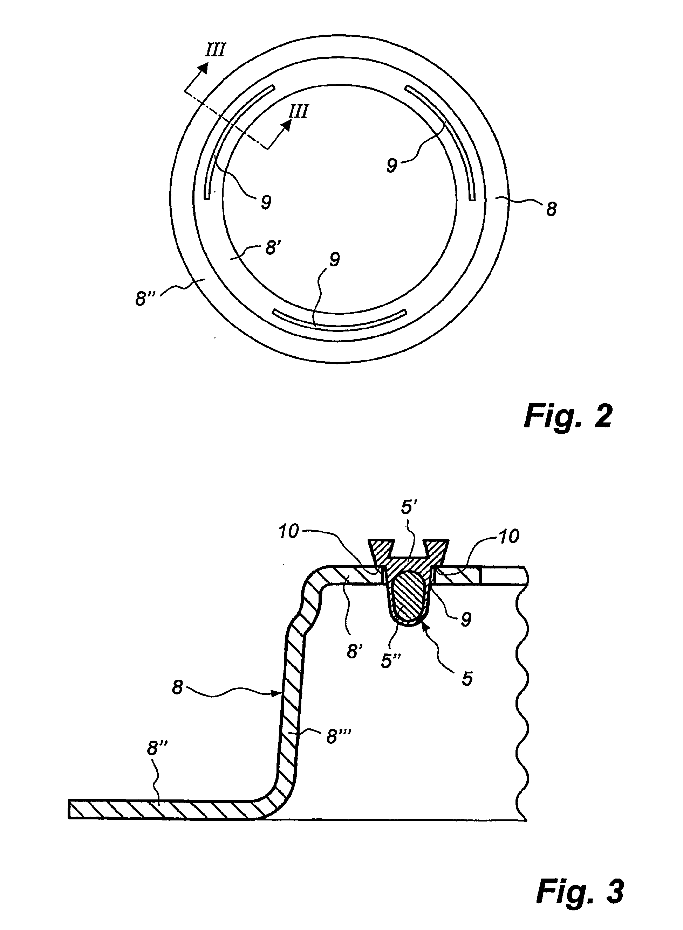

When manufacturing the concrete pipe 2 according to Fig. 1 provided with load-distributing strips 5, a mould is used, which comprises a bottom ring 8 according to the invention. Such a bottom ring 8 is shown in Figs 2 and 3, the bottom ring 8 in Fig. 3 being shown with a rubber strip 5 arranged therein. The bottom ring 8 is circular and has a horizontal inner annular part 8' and a horizontal outer annular part 8", which are connected to each other by means of a vertical annular frame part 8"'. Three circular-arc-shaped slots 9, which each in the shown example have an extent of about 60°, are formed in the inner annular part 8' and are uniformly distributed in the circumferential direction of the bottom ring 8.

When manufacturing the concrete pipe 2, a rubber strip 5 is placed in each slot 9. As shown in Fig. 3, the strip 5 has between its first portion 5' and second portion 5" on each side a shoulder portion 10, by means of which the strip 5 is suspended from the bottom ring 8 in the slot 9 in such a manner that its first portion 5' is located above the inner annular part 8' of the bottom ring 8 and therefore will be embedded in the concrete pipe 2. As will be appreciated, casting occurs by the mould, in which the bottom ring 8 is included, being filled from above with concrete.

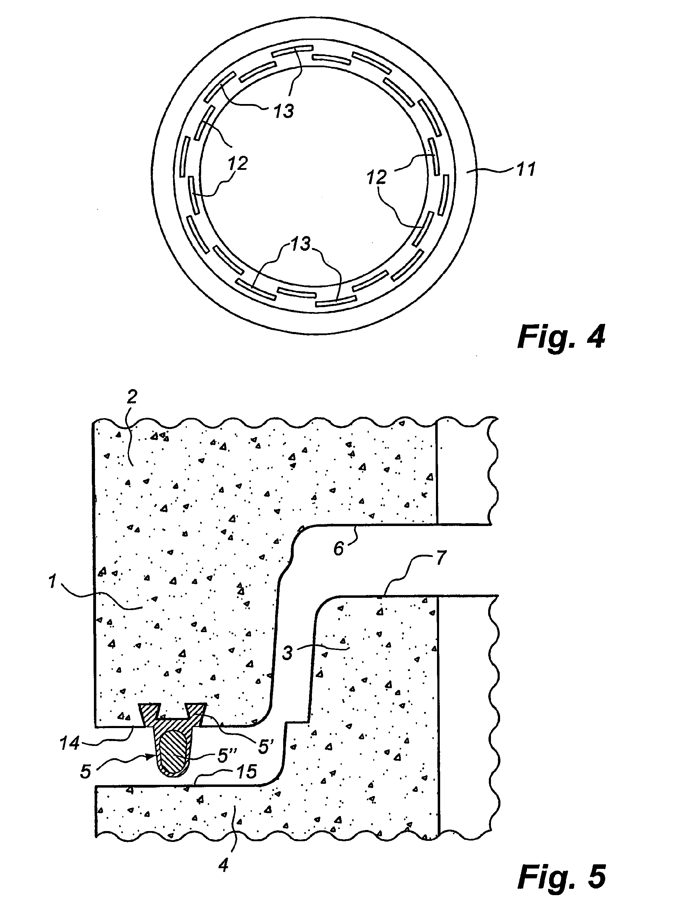

Fig. 4 shows an alternative embodiment of a bottom ring 11 according to the invention. The bottom ring 11 differs from the bottom ring 8 according to Fig. 2, in which the three slots 9 are located on a common circle, by the number of slots 12, 13 being considerably larger, the slots 12, 13 being significantly shorter than the slots 9, half of the slots (slots 12) being located on an inner circle, and half of the slots (slots 13) being located on an outer circle. As shown in Fig. 4, the slots 12 and 13 on the two circles are slightly offset relative to each other in the circumferential direction. In an alternative embodiment, the slots 12 on the inner circle are located opposite to the corresponding slots 13 on the outer circle.

Fig. 5 shows the concrete pipe 2 with the load-distributing means consisting of the three strips 5 arranged in such a manner that the first portion 5' of the respective strips 5 is embedded in the concrete pipe 2, and the second portion 5" thereof projects essentially axially from the radially outer end face 14 of the concrete pipe 2 to be pressed against the radially outer end face 15 of the concrete pipe 4.

The bottom ring 16 shown in Figs 6 and 7 differs from the bottom ring 8 shown in Figs 2 and 3 only by the slots 9 being formed in the outer annular part 8" of the bottom ring 16, not in the inner annular part 8' thereof, and the bottom ring 16 having an annular flange 17 which projects from the underside of the outer annular part 8" and by means of which the bottom ring 16 can be placed on a base in such a manner that the outer annular part 8" is held at a sufficient distance from this base to make room for the projecting second portion 5" of the rubber strip 5.

As shown in Figs 3 and 7, the rubber strip 5 has at the level of the slot 9 a slightly smaller width than the slot. This, together with the tapering shape of the strip 5, makes it easier in stripping to remove the bottom ring 8 and 16 respectively, without damaging the strip 5.

As will be evident from that stated above, a bottom ring 8, 11 or 16 can be manufactured in an extremely simple way by modifying an existing bottom ring for a mould intended for casting a concrete pipe without partially embedded load-distributing strips simply by the slots 9 or 12 and 13 being formed in the existing bottom ring. No further modifications or corrections of the bottom ring need be made.

## Claims

1. A bottom ring for a mould for casting a concrete pipe (2), which bottom ring (8; 11; 16) is adapted to form an end face (6, 14) of the concrete pipe (2) and includes rubber strips (5) for partial embedding in the concrete pipe (2) during casting of the concrete pipe, **characterised in that** the bottom ring (8; 11; 16) has at least two through slots (9; 12, 13) which extend in the circumferential direction of the ring and are distributed in the circumferential direction and hold said rubber strips (5) therein, said slots (9; 12, 13) having a smaller width than a first portion (5') of the rubber strips (5), which is adapted to be embedded in said end face (6, 14) of the concrete pipe (2), and a greater width than a second portion (5") thereof, which is adapted to project from said end face (6, 14) of the concrete pipe (2), the bottom ring (8; 11; 16) holding the rubber strips (5) suspended from the slots (9; 12, 13).

2. A bottom ring as claimed in claim 1, in which the rubber strips (5) between their first portion (5') and second portion (5") have two opposite shoulder portions (10), by means of which the rubber strips (5) are suspended from the slots (9; 12, 13).

3. A bottom ring as claimed in claim 1 or 2, in which the slots (9) are distributed along a circle.

4. A bottom ring as claimed in claim 1 or 2, in which some of the slots (12) are distributed along a first circle and the rest of the slots (13) are distributed along a second circle.

5. A bottom ring as claimed in claim 4, in which the slots (12) distributed along the first circle are offset in the circumferential direction relative to the slots (13) distributed along the second circle.

6. A method for casting a concrete pipe (2), using a mould having a bottom ring (8; 11; 16) which is adapted to form an end face (6, 14) of the concrete pipe (2), wherein rubber strips (5) are placed in the bottom ring for partial embedding in the concrete pipe (2) during casting of the concrete pipe, **characterised**
**in that** the rubber strips (5) are placed in at least two through slots (9; 12, 13) of the bottom ring (8; 11; 16) which slots extend and are distributed in the circumferential direction of the ring and hold the rubber strips (5), wherein said slots (9; 12, 13) have a smaller width than a first portion (5') of the rubber strips (5), which is adapted to be embedded in the concrete pipe (2), and a greater width than a second portion (5") thereof, which is adapted to project from the concrete pipe (2), such that the bottom ring (8; 11; 16) holds the rubber strips (5) suspended from the slots (9; 12, 13).

7. A method as claimed in claim 6, wherein the rubber strips (5) between their first portion (5') and second portion (5") have two opposite shoulder portions (10), by means of which the rubber strips (5) are suspended from the slots (9; 12, 13).

8. A method as claimed in claim 6 or 7, wherein the slots (9) are distributed along a circle.

9. A method as claimed in claim 6 or 7, in which some of the slots (12) are distributed along a first circle and the rest of the slots (13) are distributed along a second circle.

10. A method as claimed in claim 9, in which the slots (12) distributed along the first circle are offset in the circumferential direction relative to the slots (13) distributed along the second circle.

## Patentansprüche

1. Unterring für eine Form zum Gießen eines Betonrohrs (2), wobei der Unterring (8, 11, 16) eingerichtet ist, um eine Stirnfläche (6, 14) des Betonrohrs (2) zu formen und Kautschukstreifen (5) zum teilweisen Einbetten in das Betonrohr (2) während des Gießens des Betonrohrs enthält,
**dadurch gekennzeichnet dass** der Unterring (8, 11, 16) wenigstens zwei Durchgangsschlitze (9, 12, 13) aufweist, die sich in der Umfangsrichtung des Rings erstrecken und in der Umfangsrichtung verteilt sind und die Kautschukstreifen (5) darin halten, wobei die Schlitze (9, 12, 13) eine kleinere Breite als ein erster Teil (5') der Kautschukstreifen (5), der eingerichtet ist, um in der Stirnfläche (6, 14) des Betonrohrs (2) eingebettet zu werden, und eine größere Breite als ein zweiter Teil (5") davon aufweisen, der eingerichtet ist, um von der Stirnfläche (6, 14) des Betonrohrs (2) hervorzustehen, und der Unterring (8, 11, 16) die an den Schlitzen (9, 12, 13) aufgehängten Kautschukstreifen (5) hält.

2. Unterring nach Anspruch 1, wobei die Kautschukstreifen (5) zwischen ihrem ersten Teil (5') und dem zweiten Teil (5") zwei gegenüberliegende Schulterteile (10) aufweisen, mittels derer die Kautschukstreifen (5) an den Schlitzen (9, 12, 13) aufgehängt sind.

3. Unterring nach Anspruch 1 oder 2, wobei die Schlitze (9) entlang eines Kreises verteilt sind.

4. Unterring nach Anspruch 1 oder 2, wobei einige der Schlitze (12) entlang eines ersten Kreises und die restlichen der Schlitze (13) entlang eines zweiten Kreises verteilt sind.

5. Unterring nach Anspruch 4, wobei die entlang des ersten Kreises verteilten Schlitze (12) in der Umfangsrichtung relativ zu den entlang des zweiten Kreises verteilten Schlitzen (13) versetzt sind.

6. Verfahren zum Gießen eines Betonrohrs (2), unter Verwendung einer Form mit einem Unterring (8, 11, 16), der eingerichtet ist, um eine Stirnfläche (6, 14) des Betonrohrs (2) zu formen, wobei in den Unterring Kautschukstreifen (5) zum teilweisen Einbetten in das Betonrohr (2) während des Gießens des Betonrohrs eingesetzt sind, **dadurch gekennzeichnet, dass** die Kautschukstreifen (5) in wenigstens zwei Durchschlitze (9, 12, 13) des Unterrings (8, 11, 16) eingesetzt sind, sich die Schlitze in der Umfangsrichtung des Rings erstrecken und verteilt sind und die Kautschukstreifen (5) halten, wobei die Schlitze (9, 12, 13) eine kleinere Breite als ein erster Teil (5') der Kautschukstreifen (5), der eingerichtet ist, um in dem Betonrohr (2) eingebettet zu werden, und eine größere Breite als ein zweiter Teil (5") davon aufweisen, der eingerichtet ist, um von dem Betonrohr (2) hervorzustehen, so dass der Unterring (8, 11, 16) die an den Schlitzen (9, 12, 13) aufgehängten Kautschukstreifen (5) hält.

7. Verfahren nach Anspruch 6, wobei die Kautschukstreifen (5) zwischen ihrem ersten Teil (5') und dem zweiten Teil (5") zwei gegenüberliegende Schulterteile (10) aufweisen, mittels die Kautschukstreifen (5) an den Schlitzen (9, 12, 13) aufgehängt sind.

8. Verfahren nach Anspruch 6 oder 7, wobei die Schlitze (9) entlang eines Kreises verteilt sind.

9. Verfahren nach Anspruch 6 oder 7, wobei einige der Schlitze (12) entlang eines ersten Kreises und die restlichen der Schlitze (13) entlang eines zweiten Kreises verteilt sind.

10. Verfahren nach Anspruch 9, wobei die entlang des ersten Kreises verteilten Schlitze (12) in der Umfangsrichtung relativ zu den entlang des zweiten Kreises verteilten Schlitzen (13) versetzt sind.

## Revendications

1. Anneau de fond pour un moule pour la coulée d'un tuyau en béton (2), lequel anneau de fond (8 ; 11 ; 16) est prévu pour former une face d'extrémité (6, 14) du tuyau en béton (2) et comprend des bandes de caoutchouc (5) destinées à être noyées partiellement dans le tuyau en béton (2) pendant la coulée du tuyau en béton, **caractérisé en ce que** l'anneau de fond (8 ; 11 ; 16) possède au moins deux rentes débouchantes 15 (9 ; 12, 13) qui s'étendent dans la direction circonférentielle de l'anneau et sont réparties dans la direction circonférentielle et y maintiennent lesdites bandes de caoutchouc (5), lesdites fentes (9 ; 12, 13) ayant une largeur plus faible qu'une première partie (5') des bandes de caoutchouc (5), qui est prévue pour être noyée dans ladite face d'extrémité (6, 14) du tuyau en béton (2), et une largeur plus grande qu'une deuxième partie (5''), qui est prévue pour dépasser de ladite, face d'extrémité (6, 14) du tuyau en béton (2), l'anneau de fond (8 ; 11 ; 16) maintenant les bandes de caoutchouc (5) suspendues depuis les fentes (9 ; 12, 13).

2. Anneau de fond selon la revendication 1, dans lequel les bandes de caoutchouc (5) entre leurs première partie (5') et deuxième partie (5'') ont deux parties d'épaulement opposées (10), au moyen desquelles les bandes de caoutchouc (5) sont suspendues depuis les fentes (9 ; 12, 13).

3. Anneau de fond selon la revendication 1 ou 2, dans lequel les fentes (9) sont réparties le long d'un cercle.

4. Anneau de fond selon la revendication 1 ou 2, dans lequel certaines des fentes (12) sont réparties le long d'un premier cercle et le reste des fentes (13) est réparti, le long d'un deuxième cercle.

5. Anneau de fond selon la revendication 4, dans lequel les fentes (12) réparties le long du premier cercle sont décalées dans la direction circonférentielle par rapport aux fentes (13) réparties le long du deuxième cercle.

6. Procédé de coulée d'un tuyau en béton (2), en utilisant un moule ayant un anneau de fond (8 ; 11 ; 16) qui est prévu pour former une face d'extrémité (6, 14) du tuyau en béton (2), des bandes de caoutchouc (5) étant placées dans l'anneau de fond afin d'être noyées partiellement dans le tuyau en béton (2) pendant la coulée du tuyau en béton, **caractérisé en ce que** les bandes de caoutchouc (5) sont placées dans au moins deux fentes débouchantes (9 ; 12, 13) de l'anneau de fond (8 ; 11 ; 16), lesquelles fentes s'étendent et sont réparties dans la direction circonférentielle de l'anneau et maintiennent les bandes de caoutchouc (5), lesdites fentes (9 ; 12, 13) ayant une largeur plus faible qu'une première partie (5') des bandes de caoutchouc (5), qui est prévue pour être noyée dans le tuyau en béton (2), et une largeur plus grande qu'une deuxième partie (5"), qui est prévue pour dépasser du tuyau en béton (2), de telle sorte que l'anneau de fond (8 ; 11 ; 16) maintient les bandes de caoutchouc (5) suspendues depuis les fentes (9 ; 12, 13).

7. Procédé selon la revendication 6. selon lequel les bandes de caoutchouc (5) entre leurs première partie (5') et deuxième partie (5'') ont deux parties d'épaulement opposées (10), au moyen desquelles les bandes de caoutchouc (5) sont suspendues depuis les fentes (9 ; 12, 13).

8. Procédé selon la revendication 6 ou 7, selon lequel les fentes (9) sont réparties le long d'un cercle.

9. Procédé selon la revendication 6 ou 7, selon lequel certaines des fentes (12) sont réparties le long d'un premier cercle et le reste des fentes (13) est réparti le long d'un deuxième cercle.

10. Procédé selon la revendication 10, selon lequel les fentes (12) réparties le long du premier cercle sont décalées dans la direction circonférentielle par rapport aux fentes (13) réparties le long du deuxième cercle.
